(19)

Europäisches
Patentamt
European
Patent Office
Office européen
des brevets

(11) **EP 2 541 651 A1**

(12) **EUROPEAN PATENT APPLICATION**
published in accordance with Art. 153(4) EPC

(43) Date of publication:
**02.01.2013 Bulletin 2013/01**

(21) Application number: **11744783.9**

(22) Date of filing: **14.02.2011**

(51) Int Cl.:
$H01M\ 4/131^{(2010.01)}$     $H01M\ 2/16^{(2006.01)}$
$H01M\ 4/1391^{(2010.01)}$    $H01M\ 4/505^{(2010.01)}$
$H01M\ 4/525^{(2010.01)}$     $H01M\ 4/62^{(2006.01)}$
$H01M\ 10/052^{(2010.01)}$

(86) International application number:
**PCT/JP2011/053592**

(87) International publication number:
**WO 2011/102497 (25.08.2011 Gazette 2011/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.02.2010 JP 2010035759**

(71) Applicant: **Sumitomo Chemical Company, Limited
Tokyo 104-8260 (JP)**

(72) Inventor: **KAGEURA, Jun-ichi
Tsukuba-shi
Ibaraki 305-0821 (JP)**

(74) Representative: **Brunetti, Fabrizio et al
Cabinet Beau de Loménie
158, rue de l'Université
75340 Paris Cedex 07 (FR)**

(54) **ELECTRODE MIXTURE, ELECTRODE, AND LITHIUM SECONDARY BATTERY**

(57) An electrode mixture containing a lithium mixed metal oxide having a BET specific surface area of 2 to 30 m2/g, a water-soluble polymer having an acid functional group, water and an electrically conductive material. An electrode produced by applying the electrode mixture on an electrode current collector, and then drying the applied current collector. A lithium secondary battery conprising the electrode as a positive electrode.

Fig. 1

EP 2 541 651 A1

**Description**

**TECHNICAL FIEID**

The present invention relates to an electrode mixture, an electrode, and a lithium secondary battery.

**BACKROUMD ART**

A lithium secondary battery has been already put into practical use as a power supply of cell phones, laptop computers and the like, and further, there are trials of application thereof also in medium and large size applications such as an automobile application and an electric power storage application.

A lithium secondary battery usually has a positive electrode containing a positive electrode active material which can be doped and dedoped with a lithium ion, a negative electrode containing a negative electrode active material which can be doped and dedoped with a lithium ion, and an electrolyte.

Electrodes such as a positive electrode and a negative electrode are produced by mixing and kneading electrode active materials such as a positive electrode active material and a negative electrode active material with a binder made of a binder resin and a dispersion medium to obtain an electrode mixture, applying the obtained electrode mixture on an electrode current collector such as foil aluminum or copper, and then drying and rolling the applied current collector. The dispersion medium is removed by drying, and an electrode mixture layer is formed on the electrode current collector. The binder resin binds the electrode mixture layer with the electrode current collector. As the binder, organic solvent-based binders are typical, and examples of the binders include the organic solvent-based binders made of polyvinylidene fluoride (binder resin) and N-methyl-2-pyrrolidone (dispersion medium). On the other hand, it is known that water-soluble polymer binders are used in order to suppress cost increase due to use of an organic solvent. Specifically, a water-soluble polymer binder made of a water-soluble polymer of cellulose (binder resin) and water (dispersion medium) is known (Patent Document 1).

When the water-soluble polymer binder is used, a lithium ion is eluted from the electrode active material in the electrode mixture, whereby pH of the electrode mixture is increased. When such an electrode mixture is applied on an electrode current collector, such as aluminum and copper, which is corrosive to strong alkalis, generation of hydrogen gas in the interface between the electrode current collector and the electrode mixture layer is concerned, and whereby reduction of the yield in the application step such as drop-off of part of the electrode mixture layer from the electrode current collector or separation of part of the electrode mixture layer from the electrode current collector is concerned. In response to this, an electrode mixture into which carbon dioxide is injected (Patent Document 2) and an electrode mixture in which an electrode active material and carbon dioxide are dry-mixed (Patent Document 3) are suggested to reduce pH.

PRIOR ART DOCUMENTS

PATENT DOCUMENTS

Patent Document 1: JP2002-42817A
Patent Document 2: JP3232910B2
Patent Document 3: JP11-204108A

**SUMMARY OF THE INVENTION**

Addition of carbon dioxide accelerates the generation of carbonate source such as lithium carbonate in the electrode mixture layer, specifically on the surface of the electrode mixture layer. The carbonate source may be a cause of gas generation in the battery. Also, the effect of suppressing pH increase by the addition of carbon dioxide is not enough. In addition, when the electrode active material having a large specific surface area that provides a lithium secondary battery showing high output in high current rate is used, reactivity of the electrode active material with water is high, whereby there is also a fear that the amount of carbon dioxide required for neutralization is increased or the treatment time is elongated. An object of the present invention is to provide an electrode mixture that gives an electrode mixture layer hard to come off or separate from the electrode current collector.

**MEANS FOR SOLVING THE PROBLEMS**

The present invention provides the following.

<1> An electrode mixture containing a lithium mixed metal oxide having a BET specific surface area of 2 to 30 m$^2$/g, a water-soluble polymer having an acid functional group, water and an electrically conductive material.

<2> The electrode mixture according to <1>, wherein the lithium mixed metal oxide is represented by the following formula (1):

$$Li_z(Ni_{1-(x+y)}Mn_xM_y)O_2 \qquad (1)$$

wherein x is not less than 0.3 and less than 1, y is not less than 0 and less than 0.7, x + y is not less than 0.3 and less than 1, z is not less than 0.5 and not more than 1.5 and M represents one or more elements selected from the group consisting of Co, Al, Ti, Mg and Fe.

<3> The electrode mixture according to <1> or <2>, wherein the acid functional group is one or more groups selected from the group consisting of carboxyl group, sulfo group, thiol group and phosphate group.

<4> The electrode mixture according to any one of <1> to <3>, wherein the water-soluble polymer having an acid functional group contains one or more compounds selected from the group consisting of carboxymethyl starch, starch phosphate, algic acid, polyacrylic acid, polymethacrylic acid and polystyrene sulfonate.

<5> The electrode mixture according to any one of <1> to <4>, further containing one or more materials selected from the group consisting of an aqueous emulsion and an aqueous dispersion.

<6> The electrode mixture according to <5>, wherein the aqueous emulsion is one or more emulsions selected from the group consisting of an emulsion of vinyl-based polymer and an emulsion of acrylic-based polymer.

<7> The electrode mixture according to <5> or <6>, wherein the aqueous dispersion is a polytetrafluoroethylene-based dispersion.

<8> The electrode mixture according to any one of <1> to <7>, further containing a thickening agent.

<9> The electrode mixture according to <8>, wherein the thickening agent contains one or more compounds selected from the group consisting of methyl cellulose, carboxymethyl cellulose, polyethylene glycol, sodium polyacrylate, polyvinyl alcohol and polyvinyl pyrrolidone.

<10> The electrode mixture according to any one of <1> to <9>, wherein the electrically conductive material contains a carbonaceous material.

<11> An electrode produced by applying the electrode mixture according to any one of <1> to <10> on an electrode current collector, and then drying the applied current collector.

<12> A lithium secondary battery having the electrode according to <11> as a positive electrode.

<13> The lithium secondary battery according to <12>, further having a separator.

<14> The lithium secondary battery according to <13>, wherein the separator is a laminate film in which a heat resistant porous layer and a porous film are stacked on each other.

## BRIEF DESCRIPTION OF THE DRAWINGS

Fig. 1 shows a SEM photograph of Electrode 1 obtained in Example 1.

Fig. 2 shows a SEM photograph of Electrode 2 obtained in Comparative Example 1.

## MODE FOR CARRYING OUT THE INVENTION

Electrode Mixture

The electrode mixture of the present invention contains a lithium mixed metal oxide, a water-soluble polymer having an acid functional group, water and an electrically conductive material.

Lithium Mixed Metal Oxide

The lithium mixed metal oxide has a BET specific surface area of 2 to 30 m$^2$/g. A lithium mixed metal oxide having a large BET specific surface area means a lithium mixed metal oxide made of particles having a small particle size. Such a lithium mixed metal oxide is used, whereby the large current discharge properties of the lithium secondary battery can be improved. Primary particles constituting the lithium mixed metal oxide usually have an average particle size of 0.05 to 1.0 $\mu$m and preferably 0.1 to 1.0 $\mu$m. The average particle size of the primary particles can be measured by observation using a SEM.

From the viewpoint of enhancing the capacity of the lithium secondary battery, the lithium mixed metal oxide

preferably has an $\alpha$-NaFeO$_2$-type crystal structure, in other words, a crystal structure belonging to the R-3m space group. The crystal structure can be identified from a powder X-ray diffraction pattern obtained by powder X-ray diffractometry using CuK$\alpha$ as a radiation source, for the lithium mixed metal oxide.

The lithium mixed metal oxide is preferably represented by the formula (1).

$$Li_z(Ni_{1-(x+y)}Mn_xM_y)O_2 \qquad (1)$$

wherein x is not less than 0.3 and less than 1, y is not less than 0 and less than 0.7, x + y is not less than 0.3 and less than 1, z is not less than 0.5 and not more than 1.5 and M represents one or more elements selected from the group consisting of Co, Al, Ti, Mg and Fe.

The lithium mixed metal oxide acts as a positive electrode active material in the lithium secondary battery. In the formula (1), M is preferably Co or Fe or both, from the viewpoint of enhancing battery capacity, and more preferably Fe from the viewpoint of further enhancing large current discharge properties. x is preferably not less than 0.3 and not more than 0.9 and more preferably not less than 0.3 and not more than 0.6. y is preferably not less than 0.001 and not more than 0.5 and more preferably not less than 0.01 and not more than 0.3. x + y is preferably not less than 0.4 and not more than 0.9, and more preferably not less than 0.4 and not more than 0.8. z is preferably not less than 0.95 and not more than 1.5 and more preferably not less than 1.0 and not more than 1.4. By setting x, y, and z to such ranges, the battery capacity can be further enhanced.

Water-Soluble Polymer Having Acid Functional Group, and Water

The water-soluble polymer having an acid functional group acts as a binder resin and binds a lithium mixed metal oxide and an electrically conductive material, and plays a role in binding these to the electrode current collector set forth below.

Examples of the acid functional group include one or more groups selected from the group consisting of carboxyl group, sulfo group, thiol group and phosphate group. Examples of the water-soluble polymer having an acid functional group include one or more compounds selected from the group consisting of carboxymethyl starch, starch phosphate, algic acid, polyacrylic acid, polymethacrylic acid and polystyrene sulfonate.

Water acts as a dispersion medium. Part of water (for example, less than 50% by weight of water) may be replaced with an organic solvent soluble in water, and water alone is preferably used as a dispersion medium. Water in the electrode mixture contains water derived from the aqueous emulsion and aqueous dispersion set forth below.

The content of the water-soluble polymer having an acid functional group in the electrode mixture is preferably from 0.1 to 15 parts by weight and more preferably from 0.5 to 6 parts by weight, based on 100 parts by weight of the lithium mixed metal oxide, from the viewpoint of improvement of the binding strength of the electrode mixture to the electrode current collector and suppression of an increase in the electrode resistance.

The polymer constituting the binder resin preferably has a glass transition temperature of 10°C or less. By limiting the glass transition temperature to 10°C or less, flexibility of the electrode is improved, and a lithium secondary battery, which is sufficiently usable even in a low temperature environment, can be obtained.

Aqueous Emulsion and Aqueous Dispersion

The electrode mixture preferably further contains one or more materials selected from the group consisting of an aqueous emulsion and an aqueous dispersion. The polymer constituting the aqueous emulsion and the aqueous dispersion acts as a binder resin. In the electrode mixture, the content of the polymer constituting one or more materials selected from the group consisting of an aqueous emulsion and an aqueous dispersion is preferably from 0.05 to 5.0 parts by weight and more preferably from 0.05 to 3.5 parts by weight, based on 100 parts by weight of the lithium mixed metal oxide, from the viewpoint of producing an electrode having a small electric resistance.

Aqueous Emulsion

The aqueous emulsion is made of a polymer and water. Examples of the aqueous emulsion include one or more emulsions selected from the group consisting of vinyl-based polymer emulsions and acrylic-based polymer emulsions. Examples of the vinyl-based polymer include vinyl acetate-based polymers (vinyl acetate homopolymer, vinyl acetate copolymer), and vinyl chloride-based polymers (vinyl chloride homopolymer, vinyl chloride copolymer). Examples of the acrylic-based polymer include alkyl acrylate homopolymers (methyl acrylate polymer, ethyl acrylate polymer, etc.), and alkyl acrylate copolymers. Among these polymers, copolymers are preferable from the viewpoint of controllability of the glass transition temperature. Examples of preferable copolymers include ethylene-vinyl acetate copolymer, ethylene-vinyl acetate-vinyl chloride copolymer, vinyl acetate-alkyl acrylate copolymer (vinyl acetate-methyl acrylate copolymer, vinyl acetate-ethyl acrylate copolymer, etc.), ethylene-vinyl chloride copolymer, vinyl chloride-vinyl acetate copolymer, vinyl chloride-alkyl acrylate copolymer (vinyl chloride-methyl acrylate copolymer, vinyl chloride-ethyl acrylate copolymer, etc.), ethylene-vinyl acetate-alkyl acrylate copolymer (ethylene-vinyl acetate-methyl acrylate copolymer, ethylene-vinyl acetate-ethyl acrylate copolymer, etc.), and methyl acrylate-ethyl acrylate copolymer, and these copolymers can be used as a mixture of two or more thereof.

The aqueous emulsion is produced by, for example, emulsion polymerization such as a surfactant method using a surfactant such as soap and a colloid method using a water-soluble polymer such as polyvinyl alcohol as a protective colloid. Examples of a polymerization method include a batch polymerization method, a pre-emulsion dropping method, and a monomer dropping method. The average particle size of various polymers in the aqueous emulsion can be varied by controlling the monomer concentration, reaction temperature, stirring speed, or the like. By the emulsion polymerization, the particle size distribution of a polymer can be made narrow, and by using such an aqueous emulsion, various components in the electrode can be made homogeneous.

Aqueous Dispersion

The aqueous dispersion is made of a polymer and water. A preferable aqueous dispersion is a polytetrafluoroethylene-based dispersion. The polytetrafluoroethylene-based dispersion can be produced by, for example, dispersing polytetrafluoroethylene in water.

Thickening Agent

The electrode mixture preferably further contains a thickening agent. By containing the thickening agent, the viscosity of the electrode mixture can be adjusted. Consequently, application properties in applying the electrode mixture onto an electrode current collector to prepare an electrode can be improved. The thickening agent is preferably a water-soluble polymer. Specific examples of the water-soluble polymer include one or more compounds selected from the group consisting of methylcellulose, carboxymethylcellulose, hydroxyethylcellulose, polyethylene glycol, sodium polyacrylate, polyvinyl alcohol and polyvinylpyrrolidone.

As the thickening agent, a thickening agent, which plays not only a role in adjusting the viscosity, but also a role as a binder, is preferable. Examples of such a thickening agent include one or more compounds selected from the group consisting of carboxymethylcellulose, hydroxyethylcellulose, sodium polyacrylate, polyvinyl alcohol and polyvinylpyrrolidone.

The thickening agent is preferably a thickening agent which improves dispersibility of an electrically conductive material in water. Examples of such a thickening agent include one or more compounds selected from the group consisting of carboxymethylcellulose, hydroxyethylcellulose, sodium polyacrylate, polyvinyl alcohol and polyvinylpyrrolidone. Generally, the electrically conductive material such as a carbonaceous material is hydrophobic and thus hard to be dispersed uniformly in water. When the thickening agent has an action of improving dispersibility of an electrically conductive material in water, the thickening agent can further uniformly disperse the electrically conductive material even in the electrode mixture. In an electrode prepared using the electrode mixture containing such a thickening agent, the lithium mixed metal oxide and the electrically conductive material are dispersed further uniformly, and an electrically conductive path in the electrode is better. Consequently, the lithium secondary battery having more excellent battery performance such as battery capacity and large current discharge properties can be obtained.

The content of the thickening agent in the electrode mixture is preferably 0.1 to 5.0 parts by weight and more preferably 0.3 to 3.5 parts by weight based on 100 parts by weight of the lithium mixed metal oxide. In addition, the weight ratio of the thickening agent to one or more materials selected from the group consisting of an aqueous emulsion and an aqueous dispersion is preferably from 1/99 to 9/1. By setting the content of the thickening agent to the above range, adhesive forces between constituent materials of the electrode mixture layer, and between the electrode mixture layer and the electrode current collector can be further enhanced, application properties to the electrode current collector is further improved, and the electrode can be provided more stably.

Electrically Conductive Material

Examples of the electrically conductive material include a carbonaceous material. Examples of the carbonaceous material include a graphite powder, carbon black (acetylene black, etc.), and fibrous carbonaceous materials (carbon nanotubes, carbon nanofibers, carbon fibers by vapor-phase growth, etc.). Carbon black (acetylene black, etc.) is fine particles having a large surface area and thus can be added in a small amount to an electrode mixture to enhance the electric conductivity inside the electrode and to improve charge and discharge efficiency and large current discharge properties. Usually, the content of an electrically conductive material in an electrode mixture is from 5 to 20 parts by weight based on 100 parts by weight of the lithium mixed metal oxide, and from the viewpoint of producing an electrode having a small electric resistance, the content is preferably from 5 to 17 parts by weight and more preferably from 5 to 12 parts by weight, based on 100 parts by weight of the lithium mixed metal oxide. When a fine-particle carbonaceous material or a fibrous carbonaceous material as described above is used as the electrically conductive material, it is also possible to reduce the content of this material.

Production of Lithium Mixed Metal Oxide

The lithium mixed metal oxide can be produced by, for example, calcining a raw material containing constituent metal elements in a prescribed ratio. The BET specific surface area of the lithium mixed metal oxide can be controlled by calcination temperature while it depends on the types of the constituent metal elements. The raw material may be a mixture of compounds of each constituent metal element. The compound may be a mixed compound which contains a plurality of metal elements. Examples of the compound of metal elements include oxides of metal elements, and compounds that are capable of decomposing and/or oxidizing at a high temperature to be oxides, such as hydroxides, oxyhydroxides, carbonates, nitrates, acetates, halides, oxalates, and alkoxides. The raw material can be produced by appropriately using a method such as a coprecipitation method, a mixing method, a sol-gel method, a spray drying method, an electrostatic spraying method or a hydrothermal method.

A method for producing a lithium mixed metal oxide by a coprecipitation method will be described below. The lithium mixed metal oxide can be produced by a method including the following steps (1), (2) and (3) in this order:

(1) a step of bringing an aqueous solution containing Ni, Mn and M into contact with an alkali to obtain a coprecipitate slurry (M represents the same meaning as described above),
(2) a step of collecting a coprecipitate from the coprecipitate slurry, and
(3) a step of calcining a mixture obtained by mixing the coprecipitate and a lithium compound to produce a lithium mixed metal oxide.

According to this production method, a lithium mixed metal oxide having a large BET specific surface area and a small average particle size can be easily obtained.

In step (1), the aqueous solution containing Ni, Mn and M can be obtained by dissolving the respective raw materials containing Ni, Mn and M, in water. Examples of the respective raw materials include chlorides, nitrates, sulfates and the like of Ni, Mn and M, and it is preferred that all of the raw materials are chlorides. When M is Fe, the raw material of Fe is preferably a chloride of divalent Fe. When the respective raw materials containing Ni, Mn and Fe are hard to dissolve in water, for example, when these raw materials are oxides, hydroxides or metal materials, these raw materials can be dissolved in an aqueous solution containing hydrochloric acid, nitric acid, sulfuric acid or the like to obtain an aqueous solution containing Ni, Mn and M.

Examples of the alkali include one or more compounds selected from the group consisting of LiOH (lithium hydroxide), NaOH (sodium hydroxide), KOH (potassium hydroxide), $Li_2CO_3$ (lithium carbonate), $Na_2CO_3$ (sodium carbonate), $K_2CO_3$ (potassium carbonate) and $(NN_4)_2CO_3$ (ammonium carbonate). The compound may be either an anhydride or a hydrate. In step (1), an aqueous solution of the alkali is preferably used as the alkali. The aqueous alkali solution may be ammonia water. The concentration of an alkali in the aqueous alkali solution is usually from about 0.5 to about 10 mol/L and preferably from about 1 to about 8 mol/L. From the viewpoint of production cost, the alkali is preferably NaOH or KOH. Two or more of the alkalis may be used in combination.

Examples of the contact method include a method in which an aqueous alkali solution is brought into contact with an aqueous solution containing Ni, Mn and M, a method in which an aqueous solution containing Ni, Mn and M is brought into contact with an aqueous alkali solution, and a method in which an aqueous solution containing Ni, Mn and M and an aqueous alkali solution are brought into contact with water. The aqueous solution containing Ni, Mn and M and the aqueous alkali solution are mutually mixed by these contact methods. It is preferable that these contacts be accompanied by stirring. The method in which an aqueous solution containing Ni, Mn and M is brought into contact with an aqueous alkali solution is preferable from the viewpoint of easily controlling pH change.

By the contact, a coprecipitate is generated, and a coprecipitate slurry can be obtained.

The ratio of the amount (mol) of Mn to the total amount (mol) of Ni, Mn and M is preferably 0.3 or more and less than 1, more preferably 0.3 or more and 0.9 or less, and further more preferably 0.3 or more and 0.6 or less, in the aqueous solution containing Ni, Mn and M.

The ratio of the amount (mol) of M to the total amount (mol) of Ni, Mn and M is preferably 0 or more and less than 0.7, more preferably 0.001 or more and 0.5 or less, and further more preferably 0.01 or more and 0.3 or less, in the aqueous solution containing Ni, Mn and M.

In step (2), a coprecipitate is collected from the coprecipitate slurry. Step (2) may be any method as long as a coprecipitate can be collected. From the viewpoint of operability, methods according to solid-liquid separation such as filtration are preferable. A coprecipitate can be collected from a coprecipitate slurry also by heating methods such as spray drying.

When a coprecipitate is collected by solid-liquid separation, step (2) is preferably the following step (2'):

(2') a step of subjecting the coprecipitate slurry to solid-liquid separation and then washing and drying the obtained solid to collect a coprecipitate.

When an alkali, Cl or the like is excessively present in the solid obtained after solid-liquid separation, it can be removed by washing the solid. From the viewpoint of efficiently washing the solid, water is preferably used as the washing liquid. If necessary, a water-soluble organic solvent such as alcohol or acetone may be added to the washing liquid. Washing may be carried out twice or more. It is also possible that washing is carried out with water, and then washing is again carried out with the water-soluble organic solvent.

The solid is washed and dried to collect a coprecipitate. Examples of the drying method include heat drying, air blast drying, and vacuum drying. The temperature in heat drying is usually from about 50 to about 300°C and preferably from about 100 to about 200°C.

The collected coprecipitate usually has a BET specific surface area of about 10 to about 100 $m^2/g$ or less. The BET specific surface area of the coprecipitate can be adjusted by the drying temperature. The coprecipitate has a BET specific surface area of preferably 20 $m^2/g$ or more and more preferably 30 $m^2/g$ or more, from the viewpoint of promoting the reactivity in the calcination described later. From the viewpoint of operability, the BET specific surface area of the coprecipitate is preferably 90 $m^2/g$ or less and more preferably 85 $m^2/g$ or less. The coprecipitate is usually made of a mixture of primary particles having a particle size of from 0.001 to 0.1 $\mu$m and secondary particles having a particle size of from 1 to 100 $\mu$m or less that are formed by aggregation of the primary particles. The particle sizes of primary particles and secondary particles can be determined by observation using a scanning electron microscope (hereinafter, may be referred to as a SEM). The particle size of secondary particles is preferably from 1 to 50 $\mu$m and more preferably from 1 to 30 $\mu$m.

In step (3), a mixture obtained by mixing the collected coprecipitate and a lithium compound in a prescribed ratio is calcined to produce a lithium mixed metal oxide. Examples of the lithium compound include one or more compounds selected from the group consisting of lithium hydroxide, lithium chloride, lithium nitrate, and lithium carbonate. The compound may be either an anhydride or a hydrate. The mixing method may be either dry mixing or wet mixing. From the viewpoint of simplicity, dry mixing is preferable. Examples of a mixing apparatus include a stirring mixer, a V-shaped mixer, a W-shaped mixer, a ribbon mixer, a drum mixer, and a ball mill.

The calcination temperature is preferably from about 600 to about 900°C and more preferably from about 650 to about 850°C. By calcining the mixture at such a calcination temperature, large current discharge properties of the lithium secondary battery can be further enhanced. By varying the calcination temperature, the average particle size and BET specific surface area of the lithium mixed metal oxide can be adjusted. Usually, there is a tendency that the higher the calcination temperature, the larger the average particle size and the smaller the BET specific surface area. The time of keeping the mixture at the calcination temperature is usually from 0.1 to 20 hours and preferably from 0.5 to 12 hours. The temperature rise rate up to the calcination temperature is usually from 50 to 400°C/hour, and the temperature drop rate down to room temperature from the retention temperature is usually from 10 to 400°C/hour. As the calcination atmosphere, air, oxygen, nitrogen, argon or a mixed gas thereof can be used. An air atmosphere is preferable.

In the calcination, the mixture may contain a reaction accelerator such as ammonium fluoride or boric acid. Specific examples of the reaction accelerator include chlorides such as NaCl, KCl and $NH_4Cl$, fluorides such as LiF, NaF, KF and $HN_4F$, and boric acid, and the chlorides are preferable, and KCl is more preferable. By containing a reaction accelerator in the mixture, the reactivity of the mixture in the calcination is improved, and the lithium mixed metal oxide having a small average particle size and a large BET specific surface area can be adjusted in some cases. Usually, when the calcination temperature is the same, there is a tendency that the larger the content of a reaction accelerator in the mixture, the larger the average particle size and the smaller the BET specific surface area of the lithium mixed metal oxide. Two or more reaction accelerators can also be used. The reaction accelerator may be added and mixed in mixing of a coprecipitate and a lithium compound. The reaction accelerator may remain in the lithium mixed metal oxide, or may be removed by washing after calcination, evaporation in calcination, or the like.

After the calcination, the lithium mixed metal oxide may be pulverized using a ball mill, a jet mill, or the like. A lithium mixed metal oxide having a large BET specific surface area can also be obtained by pulverization. Pulverization and calcination may be repeated twice or more. The lithium mixed metal oxide can be washed or classified as required.

Production of Electrode Mixture

The electrode mixture can be produced by kneading a lithium mixed metal oxide, a water-soluble polymer having an acid functional group, water and an electrically conductive material.

As a mixer to be used for kneading, an apparatus having a high shear force is preferable. Specific examples of the mixer include a planetary mixer, a kneader, and an extrusion type kneading machine. From the viewpoint of improving dispersibility of the various components in the electrode mixture, by using a dispersing machine such as a homogenizer, aggregation of the various components in the electrode mixture is reduced, and a more homogeneous electrode mixture can be produced.

The solid concentration of the constituents in the electrode mixture other than water is usually from 30 to 90% by weight, preferably from 30 to 80% by weight, and more preferably from 30 to 70% by weight, from the viewpoint of the thickness of the obtained electrode and applicability. In other words, the concentration of water in the electrode mixture is usually from 10 to 70% by weight, preferably from 20 to 70% by weight, and more preferably from 30 to 70% by weight.

Electrode

Next, an electrode will be described. The electrode of the present invention is produced by applying the electrode mixture of the present invention on an electrode current collector, and then drying the applied current collector. The water in the electrode mixture is removed by drying, and an electrode mixture layer is formed on the electrode current collector to produce an electrode.

Examples of the material of the electrode current collector include Al, Ni, and stainless steel, and Al is preferable since it can be easily processed into a thin film and is cheap. Examples of the form of the electrode current collector include foil, flat plate, mesh, net, lath, perforated metal or embossed, and combinations thereof (e.g., mesh-like flat plate). Concavities and convexities may be formed on the surface of the electrode current collector by etching.

Examples of the method of applying the electrode mixture on the electrode current collector include a slit die coating method, a screen coating method, a curtain coating method, a knife coating method, a gravure coating method, and an electrostatic spray method. Examples of the method of drying carried out after the application include heat drying, air blast drying, and vacuum drying. The temperature of heat drying is usually from about 50 to about 150°C. The electrode may be pressed after drying. The thickness of the electrode is usually from about 5 to about 500 $\mu$m. The electrode produced as above is very useful as a positive electrode in the lithium secondary battery.

Lithium Secondary Battery

The lithium secondary battery of the present invention has the electrode of the present invention as a positive electrode. A lithium secondary battery can be produced as follows using the electrode of the present invention as a positive electrode. An electrode group obtained by laminating and winding a separator, a negative electrode and a positive electrode is accommodate in a battery case such as a battery can, thereafter, an electrolytic solution made of an organic solvent containing an electrolyte is injected into the case, and thus, a lithium secondary battery can be produced.

Examples of the shape of the electrode group include shapes whose cross section when the electrode group is cut in a direction perpendicular to the axis of the laminate reveals circle, ellipse, rectangle, rounded rectangle, or the like. Also, examples of the shape of the battery include a paper shape, a coin shape, a cylindrical shape, and a square shape.

Negative Electrode

The negative electrode may be an electrode which can be doped and dedoped with lithium ions at a potential lower than that of a positive electrode. Examples of the negative electrode include electrodes in which a negative electrode mixture containing a negative electrode active material is supported on a negative electrode current collector, and electrodes made solely of a negative electrode active material. Examples of the negative electrode active material include carbonaceous materials, chalcogen compounds (oxides, sulfides, and the like), nitrides, and metals or alloys, which can be doped and dedoped with a lithium ion at a potential lower than that of a positive electrode. These materials may be mixed and used as a negative electrode active material.

The negative electrode active materials will be exemplified below. Specific examples of the carbonaceous material include graphites such as natural graphite and artificial graphite, coke, carbon black, pyrolytic carbon, carbon fibers, and organic polymer compound calcined bodies. Specific examples of the oxide include oxides of silicon represented by the formula $SiO_x$ (wherein x is a positive real number) such as $SiO_2$ and $SiO$, oxides of titanium represented by the formula $TiO_x$ (wherein x is a positive real number) such as $TiO_2$ and $TiO$, oxides of vanadium represented by the formula $VO_x$ (wherein x is a positive real number) such as $V_2O_5$ and $VO_2$, oxides of iron represented by the formula $FeO_x$ (wherein x is a positive real number) such as $Fe_3O_4$, $Fe_2O_3$ and $FeO$, oxides of tin represented by the formula $SnO_x$ (wherein x is a positive real number) such as $SnO_2$ and $SnO$, oxides of tungsten represented by the formula $WO_x$

(wherein x is a positive real number) such as $WO_3$ and $WO_2$, and mixed metal oxides containing lithium and titanium and/or vanadium such as $Li_4Ti_5O_{12}$ and $LiVO_2$ (including $Li_{1.1}V_{0.9}O_2$). Specific examples of the sulfide include sulfides of titanium represented by the formula $TiS_x$ (wherein x is a positive real number) such as $Ti_2S_3$, $TiS_2$ and $TiS$, sulfides of vanadium represented by the formula $VS_x$ (wherein x is a positive real number) such as $V_3S_4$, $VS_2$ and $VS$, sulfides of iron represented by the formula $FeS_x$ (wherein x is a positive real number) such as $Fe_3S_4$, $FeS_2$ and $FeS$, sulfides of molybdenum represented by the formula $MoS_x$ (wherein x is a positive real number) such as $MO_2S_3$ and $MOS_2$, sulfides of tin represented by the formula $SnS_x$ (wherein x is a positive real number) such as $SnS_2$ and $SnS$, sulfides of tungsten represented by the formula $WS_x$ (wherein x is a positive real number) such as $WS_2$, sulfides of antimony represented by the formula $SbS_x$ (wherein x is a positive real number) such as $Sb_2S_3$, and sulfides of selenium represented by the formula $SeS_x$ (wherein x is a positive real number) such as $Se_5S_3$, $SeS_2$, and $SeS$. Specific examples of the nitride include lithium-containing nitrides such as $Li_3N$ and $Li_{3-x}A_xN$ (wherein A is Ni and/or Co, and $0 < x < 3$.). These carbonaceous materials, oxides, sulfides and nitrides may be used in combination. These materials may be either crystalline or amorphous. These carbonaceous materials, oxides, sulfides and nitrides are mainly supported on a negative electrode current collector, and used as an electrode.

Specific examples of the metal include lithium metals, silicon metals and tin metals. Examples of the alloy include lithium alloys such as Li-Al, Li-Ni and Li-Si, silicon alloys such as Si-Zn, tin alloys such as Sn-Mn, Sn-Co, Sn-Ni, Sn-Cu and Sn-La, and alloys such as $Cu_2Sb$ and $La_3Ni_2Sn_7$. These metals and alloys are mainly used solely as an electrode (for example, used in the form of foil).

In the lithium secondary battery, from the viewpoint of high potential flatness, low average discharge potential, good cyclic performance, and the like, carbonaceous materials primarily made of graphite such as natural graphite or artificial graphite are preferable among the negative electrode active materials. Examples of the shape of the carbonaceous material include a flake shape as in natural graphite, a sphere as in mesocarbon microbeads, and a fibrous shape as in a graphitized carbon fiber. The carbonaceous material may be an aggregate.

The negative electrode mixture contains a binder, as required. Examples of the binder include thermoplastic resins, and specific examples thereof include polyvinylidene fluoride (PVdF), thermoplastic polyimide, carboxymethylcellulose, polyethylene, and polypropylene.

Examples of the negative electrode current collector include Cu, Ni, and stainless steel. From the viewpoint of difficulty of making an alloy with lithium and ease of processing into a thin film, Cu is preferable. Examples of the method for making the negative electrode current collector support a negative electrode mixture include a method of pressure molding, and a method of applying a negative electrode mixture paste obtained using a dispersion medium on the negative electrode current collector and drying the applied current collector. The obtained negative electrode may be pressed. The dispersion medium may be either water or an organic solvent. From the viewpoint of suppressing the production cost in using an organic solvent-based binder, the dispersion medium is preferably water.

Separator

As the separator, for example, there can be used members having a form of a porous film, a non-woven fabric, a woven fabric or the like made of a material such as a polyolefin resin such as polyethylene or polypropylene, a fluorine resin, or a nitrogen-containing aromatic polymer. The separator may be made of two or more of the above-described materials or may be formed by laminating the above-described materials. Examples of the separator include separators described in JP2000-30686A, JP10-324758A, and the like. The thickness of the separator is preferably thinner as long as mechanical strength is maintained, from the viewpoint of increasing the volumetric energy density of a battery and decreasing internal resistance, and is usually from about 5 to about 200 $\mu$m and preferably from about 5 to about 40 $\mu$m.

The separator preferably has a porous film containing a thermoplastic resin. In the lithium secondary battery, the separator is disposed between a positive electrode and a negative electrode. In the lithium secondary battery, the separator preferably has a function by which, when an abnormal current flows in the battery due to short circuit between a positive electrode and a negative electrode or the like, the current is interrupted to block (shutdown) the flow of excessive current. Shutdown is carried out by obstructing micropores of a porous film of a separator when the temperature exceeds usual use temperature. The separator preferably has a function of maintaining a shutdown state even if the temperature in the battery increases to a certain high temperature after shutdown, without being ruptured due to the increased temperature. Examples of such a separator include a laminate film in which a heat resistant porous layer and a porous film are stacked on each other, and by using the film as a separator, it is possible to further increase the heat resistance of a lithium secondary battery. The heat resistant porous layer may be laminated on both surfaces of the porous film.

Hereinbelow, the laminate film in which a heat resistant porous layer and a porous film are stacked on each other will be described. In the laminate film, the heat resistant porous layer is a layer having higher heat resistance than the porous film. The heat resistant porous layer may be formed from an inorganic powder, or may contain a heat resistant resin. By containing a heat resistant resin in the heat resistant porous layer, the heat resistant porous layer can be formed by an easy method such as application. Examples of the heat resistant resin include polyamide, polyimide, polyamideimide, polycarbonate, polyacetal, polysulfone, polyphenylene sulfide, polyether ketone, aromatic polyester, polyether sulfone, and polyether imide. From the viewpoint of further enhancing heat resistance, the heat resistant resin is preferably polyamide, polyimide, polyamideimide, polyether sulfone or polyether imide, more preferably polyamide, polyimide or polyamideimide, further more preferably a nitrogen-containing aromatic polymer such as aromatic polyamide (para-oriented aromatic polyamide, meta-oriented aromatic polyamide), aromatic polyimide or aromatic polyamideimide, especially preferably an aromatic polyamide (aramid), and particularly preferably para-oriented aromatic polyamide (hereinafter, referred to as "para-aramid" in some cases). Examples of the heat resistant resin also include poly-4-methylpentene-1 and cyclic olefin-based polymers. By using these heat resistant resins, the heat resistance of a laminate film, that is, the thermal destruction temperature of a laminate film can be further increased. Among these heat resistant resins, when a nitrogen-containing aromatic polymer is used, the compatibility with an electrolytic solution may be good due to polarity in its molecule, and liquid retention properties of the electrolytic solution in a heat resistant porous layer may also be improved. Whereby, in the production of the lithium secondary battery, the rate of injecting the electrolytic solution is accelerated, and also the charge and discharge capacity of the lithium secondary battery is further increased.

The thermal destruction temperature of the laminate film depends on the type of the heat resistant resin, and is selected according to the use environment and intended use. More specifically, the thermal destruction temperature of the film can be controlled to about 400°C when the above-described nitrogen-containing aromatic polymer is used, to about 250°C when poly-4-methylpentene-1 is used, and to about 300°C when a cyclic olefin-based polymer is used, as the heat resistant resin, respectively. When the heat resistant porous layer is made of an inorganic powder, the thermal destruction temperature of the film can be controlled to, for example, 500°C or more.

The para-aramid is obtained by polycondensation of a para-oriented aromatic diamine and a para-oriented aromatic dicarboxylic halide. The para-aramid consists substantially of a repeating unit in which an amide bond is linked at a para-position or a similar orientation position of an aromatic ring (for example, an orientation position extending coaxially or parallel toward the reverse direction, such as 4,4'-biphenylene, 1,5-naphthalene, or 2,6-naphthalene). Specific examples thereof include para-aramids having a para-orientation type structure or a structure similar to the para-orientation type, such as poly(para-phenyleneterephthalamide), poly(para-benzamide), poly(4,4'-benzanilide terephthalamide), poly(para-phenylene-4,4'-biphenylene dicarboxylic amide), poly(para-phenylene-2,6-naphthalene dicarboxylic amide), poly(2-chloro-para-phenyleneterephthalamide), and para-phenyleneterephthalamide/2,6-dichloro para-phenyleneterephthalamide copolymer.

The aromatic polyimide is preferably a wholly aromatic polyimide produced by polycondensation of an aromatic diacid anhydride and a diamine. Specific examples of the diacid anhydride include pyromellitic dianhydride, 3,3',4,4'-diphenylsulfone tetracarboxylic dianhydride, 3,3',4,4'-benzophenone tetracarboxylic dianhydride, 2,2'-bis(3,4-dicarboxyphenyl)hexafluoropropane, and 3,3',4,4'-biphenyl tetracarboxylic dianhydride. Specific examples of the diamine include oxydianiline, para-phenylenediamine, benzophenonediamine, 3,3'-methylenedianiline, 3,3'-diaminobenzophenone, 3,3'-diaminodiphenylsulfone, and 1,5-naphthalenediamine. In addition, solvent-soluble polyimides can be suitably used. Examples of such a polyimide include a polyimide which is a polycondensate of 3,3',4,4'-diphenylsulfone tetracarboxylic dianhydride and an aromatic diamine.

Examples of the aromatic polyamideimide include those obtained by polycondensation of an aromatic dicarboxylic acid and an aromatic diisocyanate and those obtained by polycondensation of an aromatic diacid anhydride and an aromatic diisocyanate. Specific examples of the aromatic dicarboxylic acid include isophthalic acid and terephthalic acid. Also, specific examples of the aromatic diacid anhydride include trimellitic anhydride. Specific examples of the aromatic diisocyanate include 4,4'-diphenylmethane diisocyanate, 2,4-tolylene diisocyanate, 2,6-tolylene diisocyanate, ortho-tolylene diisocyanate, and m-xylene diisocyanate.

From the viewpoint of further enhancing ion permeability, the thickness of the heat resistant porous layer is preferably small, and specifically, preferably from 1 to 10 $\mu$m, further preferably from 1 to 5 $\mu$m, and particularly preferably from 1 to 4 $\mu$m. The heat resistant porous layer has micropores, and the pore size (diameter) is usually 3 $\mu$m or less and preferably 1 $\mu$m or less. When the heat resistant porous layer contains a heat resistant resin, the heat resistant porous layer can further contain the filler described later.

In the laminate film, it is preferable that the porous film have micropores, and have a shutdown function. In this case, the porous film contains a thermoplastic resin. The micropore size in the porous film is usually 3 $\mu$m or less and preferably 1 $\mu$m or less. The porous film has a porosity of usually from 30 to 80% by volume and preferably from 40 to 70% by volume. In the lithium secondary battery, when the temperature exceeds the usual use temperature, the porous film containing a thermoplastic resin can obstruct micropores by softening of the thermoplastic resin constituting the film.

As the thermoplastic resin, those which are not soluble in an electrolytic solution of a lithium secondary battery should be selected. Specific examples of the thermoplastic resin include polyolefin resins such as polyethylene and polypropylene and thermoplastic polyurethane resins, and a mixture of two or more of these compounds may be used. From the viewpoint of softening at a lower temperature to cause shutdown, the porous film preferably contains polyethylene. Specific examples of the polyethylene include polyethylenes such as low density polyethylene, high density polyethylene and linear polyethylene, and ultrahigh molecular weight polyethylenes having a molecular weight of 1000000 or more can also be mentioned. From the viewpoint of enhancing the puncture strength of a porous film, the thermoplastic resin constituting the film preferably contains an ultrahigh molecular weight polyethylene. From the viewpoint of easily producing a porous film, the thermoplastic resin preferably contains a wax made of a polyolefin of low molecular weight (weight average molecular weight of 10000 or less) in some cases.

The thickness of the porous film in the laminate film is usually from 3 to 30 $\mu$m, further preferably from 3 to 25 $\mu$m, and more preferably from 3 to 19 $\mu$m. The thickness of the laminate film is usually 40 $\mu$m or less, preferably 30 $\mu$m or less, and more preferably 20 $\mu$m or less. It is preferred that the value of A/B be 0.1 or more and 1 or less when the thickness of the heat resistant porous layer is denoted by A ($\mu$m) and the thickness of the porous film is denoted by B ($\mu$m).

When the heat resistant porous layer contains a heat resistant resin, the heat resistant porous layer may contain one or more fillers. The filler may be selected from an organic powder, an inorganic powder and a mixture thereof. It is preferred that particles constituting the filler have an average particle size of from 0.01 to 1 $\mu$m.

Examples of the organic powder include powders made of organic substances such as homopolymers or copolymers of two or more of styrene, vinyl ketone, acrylonitrile, methyl methacrylate, ethyl methacrylate, glycidyl methacrylate, glycidyl acrylate, methyl acrylate and the like; fluorine-containing resins such as polytetrafluoroethylene, ethylene tetrafluoride-propylene hexafluoride copolymer, ethylene tetrafluoride-ethylene copolymer and polyvinylidene fluoride; melamine resins; urea resins; polyolefins; and polymethacrylate. The organic powders may be used singly or can be used as a mixture of two or more thereof. Among the organic powders, a polytetrafluoroethylene powder is preferable from the viewpoint of chemical stability.

Examples of the inorganic powder include powders made of inorganic substances such as metal oxides, metal nitrides, metal carbides, metal hydroxides, carbonates and sulfates, and among these, powders made of inorganic substances of low electric conductivity are preferable. Specific examples of the powders include powders made of alumina, silica, titanium dioxide, calcium carbonate, and the like. The inorganic powders may be used singly or can be used as a mixture of two or more thereof. Among the inorganic powders, an alumina powder is preferable from the viewpoint of chemical stability. It is more preferred that all particles constituting the filler be alumina particles. It is further more preferred that all particles constituting the filler be alumina particles and that part or all of them be approximately spherical alumina particles. When the heat resistant porous layer is formed from an inorganic powder, the above-exemplified inorganic powders should be used, and should be used in combination with a binder as required.

The content of the filler in the case where the heat resistant porous layer contains a heat resistant resin depends on the specific gravity of the material of the filler. For example, when all particles constituting the filler are alumina particles, the weight of the filler is usually from 5 to 95, preferably from 20 to 95, and more preferably from 30 to 90, when the total weight of the heat resistant porous layer is defined as 100. These ranges can be appropriately set, depending on the specific gravity of the material of the filler.

Examples of the shape of the particles constituting the filler includes an approximately spherical shape, a plate shape, a column shape, a needle shape, a whisker shape, and a fibrous shape, and any shapes of the particles can be used. Approximately spherical particles are preferable since uniform pores are likely to be formed. Examples of the approximately spherical particles include particles having an aspect ratio of the particles (major axis of the particles/minor axis of the particles) of 1 to 1.5. The aspect ratio of the particles can be determined by an electron micrograph.

From the viewpoint of ion permeability in the lithium secondary battery, the separator has an air permeability according to the Gurley method of preferably from 50 to 300 sec/100 cc and further preferably from 50 to 200 sec/100 cc. The separator has a porosity of usually from 30 to 80% by volume and preferably from 40 to 70% by volume. The separator may be a laminate of separators having different porosities.

Electrolytic Solution

In the lithium secondary battery, the electrolytic solution is usually made of an organic solvent containing an electrolyte. Examples of the electrolyte include lithium salts such as $LiClO_4$, $LiPF_6$, $LiAsF_6$, $LiSbF_6$, $LIBF_4$, $LiCF_3SO_3$, $LiN(SO_2CF_3)_2$, $LiN(SO_2C_2F_5)_2$, $LiN(SO_2CF_3)(COCF_3)$, $Li(C_4F_9SO_3)$, $LiC(SO_2CF_3)_3$, $Li_2B_{10}Cl_{10}$, LiBOB (wherein BOB refers to bis(oxalato)borate), lower aliphatic carboxylic acid lithium salts, and $LiAlCl_4$. A mixture of two or more thereof may be used. Usually, among these compounds, one or more fluorine-containing lithium salts selected from the group consisting of $LiPF_6$, $LiAsF_6$, $LiSbF_6$, $LiBF_4$, $LiCF_3SO_3$, $LiN(SO_2CF_3)_2$ and $LiC(SO_2CF_3)$ are used.

Examples of the organic solvent in the electrolytic solution include carbonates such as propylene carbonate, ethylene carbonate, dimethyl carbonate, diethyl carbonate, ethyl methyl carbonate, 4-trifluoromethyl-1,3-dioxolan-2-one, and 1,2-di(methoxycarbonyloxy)ethane; ethers such as 1,2-dimethoxyethane, 1,3-dimethoxypropane, pentafluoropropyl methyl ether, 2,2,3,3-tetrafluoropropyl difluoromethyl ether, tetrahydrofuran, and 2-methyltetrahydrofuran; esters such as methyl formate, methyl acetate, and $\gamma$-butyrolactone; nitriles such as acetonitrile and butyronitrile; amides such as N,N-dimethylformamide and N,N-dimethylacetamide; carbamates such as 3-methyl-2-oxazolidone; sulfur-containing compounds such as sulfolane, dimethyl sulfoxide, and 1,3-propane sultone; and compounds obtained by introducing a fluorine substituent into these organic solvents. A mixed solvent in which two or more of these solvents are mixed may be used. The mixed solvent is preferably mixed solvents containing carbonates, and further preferably mixed solvents of a cyclic carbonate and a non-cyclic carbonate or mixed solvents of a cyclic carbonate and ethers. As the mixed solvents of a cyclic carbonate and a non-cyclic carbonate, mixed solvents containing ethylene carbonate, dimethyl carbonate and ethyl methyl carbonate are preferable from the viewpoint of wide operational temperature range, excellent load properties, difficult degradability of the negative electrode active material made of a graphite material such as natural graphite or artificial graphite, and the like. From the viewpoint of obtaining a particularly excellent safety improving effect, fluorine-containing lithium salts such as $LiPF_6$ and an electrolytic solution containing an organic solvent having a fluorine substituent are preferable. Mixed solvents containing ethers having a fluorine substituent such as pentafluoropropyl methyl ether or 2,2,3,3-tetrafluoropropyl difluoromethyl ether and dimethyl carbonate are further preferable since these are excellent also in large current discharge properties.

A solid electrolyte may be used in place of the electrolytic solution. Examples of the solid electrolyte include organic polymer electrolytes such as a polyethylene oxide-based polymer and a polymer containing one or more of polyorganosiloxane chain and polyoxyalkylene chain. Gel type electrolytes in which an electrolyte solution is supported on a polymer can also be used. Inorganic solid electrolytes containing a sulfide such as $Li_2S-SiS_2$, $Li_2S-GeS_2$, $Li_2S-P_2S_5$, $Li_2S-B_2S_3$, $Li_2S-SiS_2-Li_3PO_4$ or $Li_2S-SiS_2-Li_2SO_4$ can also be used. Using these solid electrolytes, safety can be further enhanced in some cases. In the lithium secondary battery of the present invention, when a solid electrolyte is used, the solid electrolyte plays a role of a separator in some cases, and therefore, a separator is not necessary in some cases.

## EXAMPLES

Next, the present invention will be described in more detail by way of examples. Various evaluations of the lithium mixed metal oxide were performed according to the following measurements.

1. Powder X-Ray Diffractometry of Lithium Mixed Metal Oxide

Powder X-ray diffractometry of a lithium mixed metal oxide was carried out using RINT 2500 TTR-type manufactured by Rigaku Corporation. A lithium mixed metal oxide was filled in a dedicated holder, and the measurement was carried out in the range of diffraction angle $2\theta$ = 10 to 90° using a CuK$\alpha$ radiation source, to obtain a powder X-ray diffraction pattern.

2. Measurement of BET Specific Surface Area of Lithium Mixed Metal Oxide

In a nitrogen atmosphere, 1 g of a powder of the lithium mixed metal oxide was dried at 150°C for 15 minutes and then the BET specific surface area was measured according to JIS R1626 using FlowSorb II 2300 manufactured by Micromeritics.

3. Composition Analysis of Lithium Mixed Metal Oxide

A powder of the lithium mixed metal oxide was dissolved in hydrochloric acid, and the composition analysis was performed using an inductively coupled plasma-atomic emission spectrometry (SPS 3000 manufactured by Seiko Instruments Inc., hereinafter, referred to as ICP-AES in some cases).

4. SEM Observation of Lithium Mixed Metal Oxide

A powder of the lithium mixed metal oxide was placed on an electrically conductive sheet pasted onto a sample stage, and using a SEM (JSM-5510) manufactured by JEOL Ltd., the powder was irradiated with an electron beam having an acceleration voltage of 20 kV to perform SEM observation. The average particle size of primary particles constituting the powder was determined by arbitrarily extracting 50 primary particles from an image (SEM photograph) obtained by SEM observation, measuring the particle sizes of them, and calculating the average value thereof.

Production Example 1 (Production of lithium mixed metal oxide)

In a polypropylene beaker, 83.88 g of potassium hydroxide was added to 200 ml of distilled water and dissolved by stirring to prepare an aqueous potassium hydroxide solution (aqueous alkali solution). Then, 16.75 g of nickel(II) chloride hexahydrate, 14.25 g of manganese(II) chloride tetrahydrate and 1.491 g of iron(II) chloride tetrahydrate were weighed out and added to 200 ml of distilled water in a glass beaker, and were dissolved by stirring to obtain a nickel-manganese-iron mixed aqueous solution. While stirring the aqueous potassium hydroxide solution, the nickel-manganese-iron mixed aqueous solution was added dropwise thereto, whereby a coprecipitate was generated to obtain a coprecipitate slurry. Subsequently, the coprecipitate slurry was subjected to filtration, and the resulting solid was washed with distilled water and dried at 100°C to collect a coprecipitate $P_1$.

Then, 3.0 g of the coprecipitate ($P_1$), 1.634 g of lithium hydroxide monohydrate and 1.743 g of potassium chloride as an inorganic melting agent were dry-mixed using an agate mortar to obtain a mixture. Subsequently, the mixture was placed in an alumina calcination vessel and maintained at 800°C for 6 hours in an air atmosphere using an electric furnace to be calcined, and the mixture was cooled to room temperature to obtain a calcined article. The pulverized article obtained by pulverizing the calcined article was washed with distilled water by decantation, and a solid obtained by filtration was dried at 300°C for 6 hours to produce a lithium mixed metal oxide 1.

As a result of composition analysis of the lithium mixed metal oxide 1, the molar ratio of Li : Ni : Mn : Fe was 1.07 : 0.47 : 0.48 : 0.05. The lithium mixed metal oxide 1 had a BET specific surface area of 8.0 $m^2$/g and an average value of primary particle size of 0.2 $\mu$m. As a result of powder X-ray diffractometry, it was found that the crystal structure of the lithium mixed metal oxide 1 was a crystal structure belonging to the R-3m space group.

Production Example 2 (Production of aqueous emulsion)

In 25 parts by weight of water, 0.7 parts by weight of sodium dodecylbenzene sulfonate, 0.005 parts by weight of ferrous sulfate and 0.8 parts by weight of sodium hydrogen carbonate were dissolved, and the resulting solution was charged to a polymerization tank, the atmosphere of which was previously replaced with ethylene. Subsequently, 2 parts by weight of vinyl chloride was charged to the tank, and the mixture was stirred and emulsified. Thereafter, the polymerization tank was pressurized to 4.9 MPa by ethylene gas and heated to 50°C. Polymerization was performed over 8 hours while continuously adding 18 parts by weight of vinyl chloride, 1.5 parts by weight of a Rongalite aqueous solution and 8.0 parts by weight of an aqueous solution of ammonium persulfate with keeping an internal temperature at 50°C. Thereafter, excessive ethylene was discharged until the tank pressure was decreased to the atmospheric pressure to obtain an aqueous emulsion containing an ethylene-vinyl chloride copolymer. The aqueous emulsion contained 50% by weight of a copolymer component, and the remainder was water.

Example 1

Using the aqueous emulsion (content of copolymer component; 50% by weight) obtained in Production Example 2 and carboxymethylcellulose (CMC, manufactured by Aldrich Chemical Co.) as a thickening agent, they were mixed so that copolymer component of the emulsion : thickening agent be 1 : 9 (weight ratio), and water was added thereto to prepare a water-based binder. Subsequently, an electrically conductive material (a mixture of acetylene black and graphite at a ratio of 9 : 1) was added to the water-based binder and mixed with a dispermat (manufactured by EKO Instruments Co., Ltd.) to prepare an electrically conductive paste. Next, the lithium mixed metal oxide 1 produced in Production Example 1 was added to the electrically conductive paste and mixed with a dispermat (manufactured by EKO Instruments Co., Ltd.) to obtain a mixture. Polyacrylic acid (manufactured by SUMITOMO SEIKA CHEMICALS CO., LTD. AQUPEC HV-505E) was added thereto so as to have a weight ratio of water-based binder : polyacrylic acid of 1 : 0.23, and they were stirred to produce an electrode mixture. The produced electrode mixture had a weight ratio of lithium mixed metal oxide : acetylene black : graphite : ethylene-vinyl chloride copolymer : CMC : polyacrylic acid : water of 100 : 10 : 1.2 : 0.11 : 1.0 : 0.26 : 290. The electrode mixture was applied onto an Al foil having the thickness of 40 $\mu$m as an electrode current collector, and the applied current collector was dried at 60°C for 2 hours, and further vacuum-dried at 80°C for 10 hours to produce an electrode 1.

Comparative Example 1

The same procedures as in Example 1 were carried out except that polyacrylic acid was not added, to prepare an electrode 2.

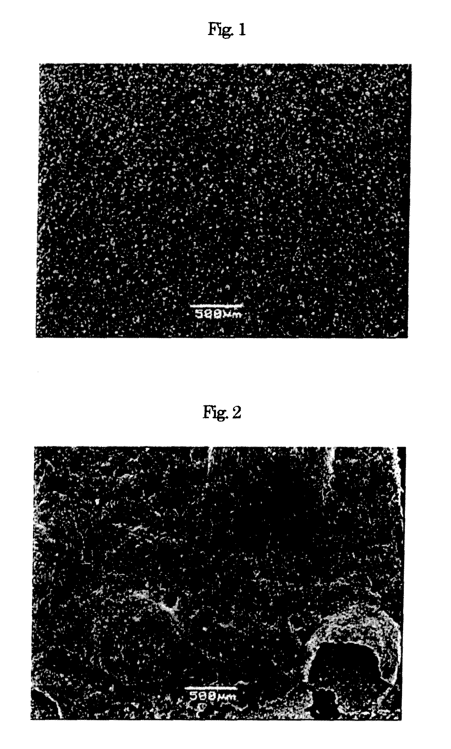

A SEM photograph of the electrode 1 is shown in Fig. 1, and a SEM photograph of the electrode 2 is shown in Fig. 2. According to Fig. 1, drop-off or separation of the electrode mixture layer from the electrode current collector was not found in the electrode 1 of the present invention. On the other hand, according to Fig. 2, drop-off or separation of the electrode mixture layer from the electrode current collector was found in the electrode 2 of Comparative Example 1. Accordingly, it wad found that corrosion in the surface of the electrode current collector is suppressed in the electrode 1 of the present invention, as compared to the electrode 2 of Comparative Example 1.

Production Example 3 (Production of laminate film)

(1) Production of application fluid

In 4200 g of N-methyl-2-pyrrolidone was dissolved 272.7 g of calcium chloride, and then 132.9 g of para-phenylenediamine was added thereto and dissolved. To the resulting solution was slowly added 243.3 g of terephthalic dichloride, and the mixture was polymerized to obtain a para-aramid, and this was diluted further with N-methyl-2-pyrrolidone, to obtain a para-aramid solution (A) having a concentration of 2.0% by weight. To 100 g of the resulting para-aramid solution were added 2 g of an alumina powder (a) (manufactured by Nippon Aerosil Co., Ltd., Alumina C, average particle size 0.02 $\mu$m) and 2 g of an alumina powder (b) (Sumicorandom manufactured by Sumitomo Chemical Co., Ltd., AA03, average particle size 0.3 $\mu$m) as fillers in a total amount of 4 g, and they were mixed and treated three times by a nanomizer (manufactured by NANOMIZER Inc.), and further, filtrated through a 1000 mesh wire netting and defoamed under a reduced pressure to produce an application slurry (B). The weight of the alumina powders (fillers) based on the total weight of the para-aramid and the alumina powders is 67% by weight.

(2) Production and evaluation of laminate film

As the porous film, a polyethylene porous film (film thickness 12 $\mu$m, air permeability 140 sec/100 cc, average pore size 0.1 $\mu$m, porosity 50%) was used. On a PET film having a thickness of 100 $\mu$m, the polyethylene porous film was fixed, and the application slurry (B) was applied on the porous film by a bar coater manufactured by Tester Sangyo Co., Ltd. The product was immersed in water while maintaining integration of the PET film and the applied porous film, to precipitate a para-aramid porous membrane (heat resistant porous layer). Thereafter, the solvent was removed by drying, and the PET film was exfoliated to obtain a laminate film in which a heat resistant porous layer and a porous film were stacked on each other. The laminate film had a thickness of 16 $\mu$m, and the para-aramid porous membrane (heat resistant porous layer) had a thickness of 4 $\mu$m. The laminate film had an air permeability of 180 sec/100 cc and a porosity of 50%. The cross section of the heat resistant porous layer in the laminate film was observed by a scanning electron microscope (SEM) to find that the laminate film had relatively small micropores of about 0.03 to about 0.06 $\mu$m and relatively large micropores of about 0.1 to about 1 $\mu$m. Evaluations of the laminate film were carried out by the following methods.

<Evaluations of laminate film>

(A) Measurement of thickness

The thickness of the laminate film and the thickness of the porous film were measured according to JIS standard (K7130-1992). Also, as the thickness of the heat resistant porous layer, a value obtained by subtracting the thickness of the porous film from the thickness of the laminate film was used.

(B) Measurement of air permeability by Gurley method

The air permeability of the laminate film was measured by digital timer mode Gurley type Densometer manufactured by Yasuda Seiki Seisakusho Ltd., according to JIS P8117.

(C) Porosity

A sample of the resulting laminate film was cut into a square with a side of 10 cm, and the weight W (g) and the thickness D (cm) thereof were measured. The weight (Wi (g); i is an integer from 1 to n) of each layer in the sample was measured, and the volume of each layer was calculated from Wi and the true specific gravity (true specific gravity i (g/cm$^3$)) of the material of each layer. The porosity (% by volume) was determined according to the following formula.

```
Porosity (% by volume) = 100 × {1 - (W1/true specific gravity 1 +

W2/true specific gravity 2 + ... + Wn/true specific gravity n)/(10 ×

10 × D)}
```

If a laminate film similar to that obtained in Production Example 3 is used as the separator, a lithium secondary battery which can further prevent thermal destruction of the film can be produced.

**INDUSTRIE APPLICABILITY**

According to the present invention, a water-soluble polymer that shows a neutralizing effect to an alkali and also acts as a binder is used, whereby pH increase of an electrode mixture by the reaction of an electrode active material having a large specific surface area with water can be suppressed, and generation of hydrogen gas in the interface between the electrode current collector and the electrode mixture layer when applying the electrode mixture can be suppressed. Consequently, drop-off or separation of the electrode mixture layer from the electrode current collector is made unlikely to occur, and thus the yield in the application step can be improved. In the present invention, since an electrode mixture is produced using a water-based binder, production cost increase in using an organic solvent-based binder can be suppressed, and an electrode and a lithium secondary battery that are also excellent from the viewpoint of environmental protection can be produced. The present invention is industrially very useful.

**Claims**

1.    An electrode mixture comprising
     a lithium mixed metal oxide having a BET Specific surface area of 2 to 30 $m^2/g$,
     a water-soluble polymer having an acid functional group,
     water and
     an electrically conductive material.

2.    The electrode mixture according to claim 1, wherein the lithium mixed metal oxide is represented by the following formula (1):

$$Li_z(Ni_{1-(x-y)}Mn_xM_y)O_2 \qquad (1)$$

     wherein x is not less than 0.3 and less than 1,
     y is not less than 0 and less than 0.7,
     x + y is not less than 0.3 and less than 1,
     z is not less than 0.5 and not more than 1.5 and
     M represents one or more elements selected from the group consisting of Co, Al, Ti, Mg and Fe.

3.    The electrode mixture according to claim 1 or 2, wherein the acid functional group is one or more groups selected from the group consisting of carboxyl group, sulfo group, thiol group and phosphate group.

4.    The mixture according to any one of claims 1 to 3, wherein the water-soluble polymer having an acid functional group contains one or more compounds selected from the group consisting of carboxymethyl starch, starch phosphate, algic acid, polyacrylic acid, polymethacrylic acid and polystyrene sulfonate.

5.    The electrode mixture according to any one of claims 1 to 4, further comprising one or more materials selected from the group consisting of an aqueous emulsion and an aqueous dispersion.

6.    The electrode mixture according to claim 5, wherein the aqueous emulsion is one or more emulsions selected from the group consisting of an emulsion of vinyl-based polymer and an emulsion of acrylic-based polymer.

7.    The electrode mixture according to claim 5 or 6, wherein the aqueous dispersion is a polytetrafluoroethylene-based dispersion.

8.    The electrode mixture according to any one of claims 1 to 7, further comprising a thickening agent.

9.    The electrode mixture according to claim 8, wherein the thickening agent contains one or more compounds selected from the group consisting of methyl cellulose, carboxymethyl cellulose, polyethylene glycol, polyacrylate, polyvinyl alcohol and polyvinyl pyrrolidone.

10.    The electrode Mixture according to any one of claims 1 to 9, wherein the electrically conductive materials contains a carbonaceous material.

11. An electrode produced by applying electrode mixture according to any of claims 1 to 10 on an electrode current collector, and then drying the applied current collector.

12. A lithium secondary battery comprising the electrode according to claim 11 as a positive electrode.

13. The lithium secondary battery according to claim 12, further comprising a separator.

14. The lithium secondary battery according to claim 13, wherein the separator is a laminate film in which a heat resistant porous layer and a porous film are stacked on each other.

Fig. 1

Fig. 2

## INTERNATIONAL SEARCH REPORT

| | International application No. |
|---|---|
| | PCT/JP2011/053592 |

**A. CLASSIFICATION OF SUBJECT MATTER**
*H01M4/131*(2010.01)i, *H01M2/16*(2006.01)i, *H01M4/1391*(2010.01)i, *H01M4/505*
(2010.01)i, *H01M4/525*(2010.01)i, *H01M4/62*(2006.01)i, *H01M10/052*(2010.01)i

According to International Patent Classification (IPC) or to both national classification and IPC

**B. FIELDS SEARCHED**

Minimum documentation searched (classification system followed by classification symbols)
H01M4/131, H01M2/16, H01M4/1391, H01M4/505, H01M4/525, H01M4/62,
H01M10/052

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 8-321298 A (Kazuo TAGAWA),<br>03 December 1996 (03.12.1996),<br>claims; example 2<br>& US 5714282 A | 1-14 |
| Y | JP 11-354125 A (Hitachi Maxell, Ltd.),<br>24 December 1999 (24.12.1999),<br>claims; examples<br>(Family: none) | 1-14 |
| Y | JP 2010-21125 A (Sumitomo Chemical Co., Ltd.),<br>28 January 2010 (28.01.2010),<br>claims; paragraphs [0009] to [0113]<br>& US 2010/0248032 A    & EP 2207228 A1<br>& WO 2009/041722 A1 | 1-14 |

| ☐ Further documents are listed in the continuation of Box C. | ☐ See patent family annex. |
|---|---|

| | |
|---|---|
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search<br>24 March, 2011 (24.03.11) | Date of mailing of the international search report<br>05 April, 2011 (05.04.11) |
|---|---|
| Name and mailing address of the ISA/<br>    Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002042817 A
- JP 3232910 B
- JP 11204108 A
- JP 2000030686 A
- JP 10324758 A